# EUROPEAN PATENT APPLICATION

(11) **EP 4 693 833 A1**
(43) Date of publication of application: **11.02.2026**
(21) Application number: 23930891.9
(22) Date of filing: 08.12.2023
(51) Int. Cl.: H02K 3/04

(54) **ROTARY ELECTRICAL MACHINE**

(30) Priority: 27.03.2023 JP 2023050540
(71) Applicant: Hitachi Industrial Equipment Systems Co., Ltd., Tokyo 101-0021 (JP); Hitachi, Ltd., Tokyo 100-8280 (JP)
(72) Inventor: IKEDA, Kenji, Tokyo 100-8280 (JP); ENOMOTO, Yuji, Tokyo 100-8280 (JP); TOKOI, Hirooki, Tokyo 100-8280 (JP); MURAKI, Takahito, Tokyo 100-8280 (JP); SAKAI, Toru, Tokyo 101-0021 (JP)
(74) Representative: MERH-IP Matias Erny Reichl Hoffmann Patentanwälte PartG mbB
(86) International application number: PCT/JP2023/044009
(87) International publication number: WO 2024/202266

(57) **Abstract**

The conduction reliability of a fitting connection portion between a recess and a protrusion of a stator coil of a rotary electrical machine is improved. The stator coil is formed by a first coil segment 30 including a protrusion 35 at one end and a second coil segment 40 including a recess 46 at one end. A projection side surface 35b of the protrusion 35 is a metal surface of the first coil segment 30, and a metal plating layer 50 having a lower hardness than a metal of the first coil segment 30 is formed on a metal surface of an inner wall surface 46b of the recess 46. When the coil segments 30 and 40 are joined together, the metal surface of the projection side surface 35b comes into contact with the metal plating layer 50, and therefore, gaps between both projections 38a and grooves 38b and the metal plating layer 50 are closed, and the contact resistance is reduced.

## Description

### TECHNICAL FIELD

The present invention relates to a rotary electrical machine, particularly to an improvement in a method for connecting end portions of coil segments serving as conductors within slots of a stator core.

### BACKGROUND ART

A rotary electrical machine used as a power source for industrial machines or for driving automobiles is required to have high efficiency. In order to increase the efficiency of a motor, it is important to reduce losses in the motor, and a design approach involving considering designs that reduce copper loss in a coil and iron loss in an iron core that are two major causes of the losses in the motor is typically used. In a typical motor, electromagnetic steel sheets are employed for the iron core portion, and the variation in loss level depending on the thickness, Si content, or the like thereof is utilized. As soft magnetic materials, there are high-performance materials such as iron-based amorphous metals having higher magnetic permeability and lower iron loss than electromagnetic steel sheets, Finemet, or nanocrystalline materials that can be expected to provide high magnetic flux density.

There is a demand for the miniaturization of a rotary electrical machine, whereas improvements in electrical insulation are required. Particularly, a structure that increases the winding space factor to achieve high output density is effective in miniaturizing a stator. For example, a stator structure composed of coil segments using a flat wire with a flat cross-section as a conducting wire instead of a typical round wire is known. In addition, when a stator using a flat wire is configured, a segment method in which end portions of divided coil segments are connected is used, and two segment methods are broadly known as a coil end connection method and an in-slot connection method.

In the coil end connection method, each coil segment has a substantially U-shape, a pair of straight portions and an inclined portion connecting end portions on one side of the two straight portion are formed, and each of the two straight portions is housed in a slot of a stator core, thereby generating a magnetic field that generates rotational torque in a rotor. The structure is such that the inclined portion is disposed outward from an end portion on one axial side of the stator core and protrudes outward from the slot of the stator core. The coil structure is such that each straight portion of the coil segment is disposed to penetrate through the slot of the slot and protrude from an end portion on the other side (opposite side), is bent outside the opposite side of the stator core, and is welded and continuously connected to a bent portion of the straight portion of another coil segment between coil ends.

In the in-slot connection method, each coil segment has a substantially U-shape, and includes a pair of straight portions and an inclined portion connecting end portions on one side of the two straight portions. A stator coil is formed by connecting a number of the coil segments in series. Two electrically adjacent coil segments connected in series are connected at one end portion of the substantially U-shape. Each of the two straight portions of each coil segment is housed in a slot of a stator core. Here, a length of the straight portions is formed to be shorter than a length of a slot portion of the stator core in a rotation axis direction. The structure is such that the inclined portion protrudes outward from an axial end portion of the stator core. The configurations described up to this point are substantially the same as those in the coil end connection method. However, in the in-slot connection method, the structure is such that the straight portions of the two coil segments are inserted into the slot from both axial ends of the stator core and are connected within the slot by crimping or the like. Since the coil segments having a substantially U-shape can be mass-produced and used and the connection of the straight portions does not require bending and welding at the coil ends, this connection method is advantageous for high productivity and miniaturization compared to the coil end connection method. Incidentally, the shapes of the end portions of the straight portions connected within the slot may vary depending the method for connecting the end portions of the straight portions.

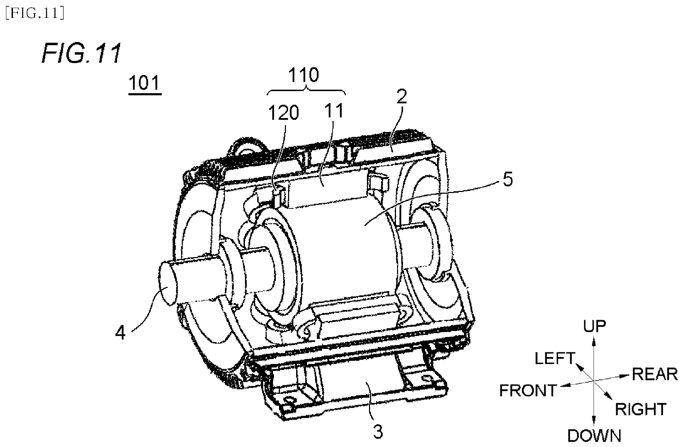

Patent Document 1 discloses a technique related to a stator of a rotary electrical machine using such an in-slot connection method. Fig. 11 is a cross-sectional perspective view showing a conventional rotary electrical machine 101. The rotary electrical machine 101 is an inner rotor, radial gap type rotary electrical machine, and includes a stator 110 that generates a magnetic force using electric power; a rotor 5 that rotates due to the magnetic force generated by the stator 110; a shaft 4 that rotates together with the rotor 5; and a housing 2 that covers the stator 110 and the rotor 5. The housing 2 is provided with an attachment portion 3 for fixing to an installation stand or the like. The stator 110 includes a stator core 11 composed of laminated steel sheets, and a stator coil 120 disposed within slots of the stator core 11.

### CITATION LIST

### PATENT DOCUMENT

Patent Document 1: JP 2022-49171 A

### SUMMARY OF THE INVENTION

### PROBLEMS TO BE SOLVED BY THE INVENTION

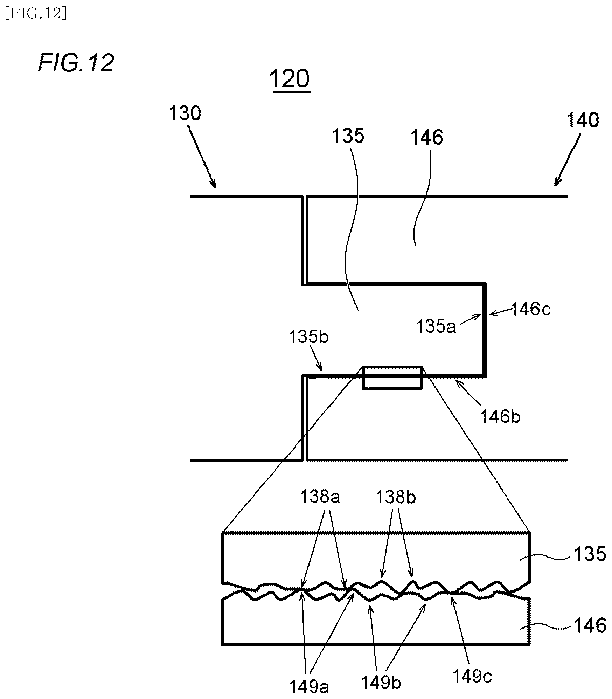

In the stator of the rotary electrical machine disclosed in Patent Document 1, within the slot of the stator core 11, a projecting portion (protrusion) formed to partially protrude in a longitudinal direction is formed at the tip of a leg portion (end portion of a straight portion) of one of two facing conductor segments (coil segments 130 and 140 to be described later with reference to Fig. 12) or a groove portion (recess) is formed on a tip surface. Fig. 12 is a partial side view showing a connection structure of the coil segment 130 including a protrusion 135 formed at an end portion and the coil segment 140 including a recess 146 formed at an end portion in the stator coil 120 of the conventional rotary electrical machine 101. Here, one phase of the stator coil 120 (not shown) is formed by alternately connecting a number of the first coil segments 130 and a number of the second coil segments 140. The protrusions 135 are formed at two end portions of the first coil segment 130, the recesses 146 are formed at two end portions of the second coil segment 140, and the protrusions 135 and the recesses 146 are fitted and joined together. In many cases, the conduction path between the protrusion 135 and the recess 146 is ensured, for example, by the contact location between a tip surface 135a of the protrusion 135 and a bottom portion 146c of the recess 146 or contact between projection side surfaces 135b of the protrusion 135 and inner wall surfaces 146b of the recess 146 that are parallel to an axial direction. The protrusion 135 is a substantially quadrangular prism, and the recess 146 facing the protrusion 135 has a space of substantially the same quadrangular prism shape. Micro-level grooves are formed on the processed surfaces of the protrusion 135 and the recess 146 when punched using a mold or the like.

A partially enlarged view showing the joined state of the fitting portion between the protrusion 135 and the recess 146 is a view on the lower side of Fig. 12. Micro-level projection 138a or depressions 138b exist on the surface of the protrusion 135, and micro-level projection 149a or depressions 149b exist on the surface of the recess 146. When observed at a micro level, the projection 138a and the projection 149a become a contact point (for example, a portion indicated by arrow 149c) and serve as a conduction path. In this manner, in the conventional fitting portion, the micro-level projections 138a and 149a mainly come into contact with each other, and therefore, there is still room for further improvement in the overall contact area.

In Patent Document 1, since plating layers are formed on both the protruding side surfaces of the protrusion 135 and the inner surfaces of the recess 146 but are the same type of plating, even contact portions between the plating layers are in a contact state caused by micro-level irregularities. Incidentally, in the partially enlarged view of Fig. 12, in order to help understanding of the irregular state of the contact surface, the projections 138a and 149a and the depressions 138b and 149b are shown in an exaggerated manner; however, in reality, the irregular state is so small to be invisible to the naked eye. In this manner, since the plating layer on the protrusion 135 side and the plating layer on the recess 146 side disclosed in Patent Document 1 is made of the same type of metal, inventors found that plastic deformation is unlikely to occur in the plating layers and the function of the plating layers to fill micro-level grooves is insufficient.

The present invention has been made in view of the above-mentioned background, and an object of the present invention is to provide a rotary electrical machine in which the conduction reliability is improved by increasing the contact area of fitting regions between coil segments through an improvement in micro-level grooves existing in fitting portions between recesses and protrusions of the coil segments.

In addition, another object of the present invention is to provide a rotary electrical machine in which the physical fitting state of a fitting portion between two coil segments having a flat wire shape connected within a slot of a stator core is improved.

### SOLUTIONS TO PROBLEMS

In order to achieve the above-mentioned object, there is provided a rotary electrical machine including: a rotor fixed to a rotating shaft; and a stator including a stator coil formed by connecting a plurality of coil segments made of a metal, and a stator core in which a plurality of slots that house a part of the stator coil is formed. The stator coil includes a first coil segment including a projecting portion (protrusion) at one end, a second coil segment including a groove portion (recess) at one end, and a fitting portion at which the projecting portion is fitted to the groove portion. At least a fitting surface of the projecting portion with the groove portion is made of a first metal, and a second metal layer having a lower hardness than the first metal is formed on at least a fitting surface of the groove portion with the projecting portion. Namely, each of the coil segments is inserted into the slot from one side or the other side of the stator core in a direction of the rotating shaft, and includes a straight portion that is housed in the slot, and an inclined portion disposed outside the slot by protruding from an end face of the stator core and extending in a direction intersecting an axial direction of the stator core. In addition, the first coil segment including the protrusion at the one end and the second coil segment including the recess at the one end are prepared as the coil segments, and one side of the fitting surface of the protrusion or the recess becomes the first metal layer, and the other side becomes the second metal layer having a lower hardness than the first metal layer, so that the first coil segment and the second coil segment are joined together by the metal layers having different hardness. For example, the first coil segment and the second coil segment are made of the same metal material, and a plating layer (second metal layer) made of a metal having a lower hardness than the first coil segment is formed on an inner groove surface of the recess of the second coil segment that is parallel to an insertion direction. In addition, a plating layer (second metal layer) made of a metal having a higher hardness than the inner groove surface of the recess of the second coil segment that is parallel to the insertion direction may be formed on a projection side surface of the protrusion of the first coil segment that is parallel to an insertion direction.

According to another feature of the present invention, a length L1 of the projection side surface in the insertion direction that is parallel to the insertion direction of the protrusion of the first coil segment of the rotary electrical machine is formed to be slightly shorter than a length L2 of the inner groove surface in the insertion direction that is parallel to the insertion direction of the recess. The protrusion of the first coil segment includes two projection side surfaces parallel to the insertion direction, a tip surface extending in a direction orthogonal to the insertion direction and connecting the two projection side surfaces, and two stepped surfaces formed on a side spaced apart from the tip surface. In addition, the recess of the second coil segment includes two inner wall surfaces parallel to the insertion direction, a bottom surface extending in a direction orthogonal to the insertion direction and connecting the two inner wall surfaces, and two abutment surfaces formed on a side of the inner wall surfaces that is spaced apart from the bottom surface. Furthermore, an angle between the stepped surface and the projection side surface of the first coil segment is formed at 90 degrees or less, and an angle between the inner wall surface and the abutment surface of the second coil segment is formed at 90 degrees or less.

According to still another feature of the present invention, each of the first coil segment and the second coil segment includes a conductor portion (for example, copper wire) made of a metal and a coating portion made of a non-conductor (for example, enamel) that coats an outside of the conductor portion, and the tip surface and the projection side surfaces of the first coil segment are formed at portions not covered with the coating portion, and the inner wall surfaces and the abutment surfaces of the second coil segment are formed at portions not covered with the coating portion. In addition, a bobbin made of a non-conductive material is disposed to align a plurality of coils in a radial direction of the slot. The first coil segment and the second coil segment are inserted into the bobbin. The protrusion of the first coil segment and the recess of the second coil segment are fitted together by press-fitting in a direction parallel to the direction of the rotating shaft, and a fitting position is located in an internal space of the bobbin.

### EFFECTS OF THE INVENTION

According to the present invention, the conduction reliability of a connection portion between two coil segments having a flat wire shape within the slot of the stator core can be improved. Problems, configurations, and effects other than those described above will become apparent from the following description of embodiments.

### BRIEF DESCRIPTION OF THE DRAWINGS

Fig. 1 is a perspective view showing a rotor 5 and a stator 10 of a rotary electrical machine 1 according to a first embodiment of the present invention.
Fig. 2 is a perspective view of the stator 10 according to the first embodiment of the present invention.
Fig. 3 is an exploded view for describing a method for assembling a stator coil 20 according to the first embodiment of the present invention, and shows a state in which a first coil segment 30 and a second coil segment 40 are inserted into a stator core 11.
Fig. 4A is a cross-sectional perspective view showing the state of the stator coil 20 shown in Fig. 2 after being assembled.
Fig. 4B is a perspective view of a bobbin 15 shown in Fig. 3, and is a partial transparent view of a fitting portion of the stator coil 20 within the bobbin 15.
Fig. 5 is a side view showing the shape of a protrusion 35 of the first coil segment 30 and a recess 46 of the second coil segment 40 according to the first embodiment of the present invention (before fitting).
Fig. 6 is a side view showing the shape of the protrusion 35 of the first coil segment 30 and the recess 46 of the second coil segment 40 according to the first embodiment of the present invention (after fitting).
Fig. 7A is a perspective view of the first coil segment 30 and the second coil segment 40 according to a second embodiment of the present invention.
Fig. 7B is a side view of the first coil segment 30 and the second coil segment 40 shown in Fig. 7A.
Fig. 7C is a side view of the first coil segment 30 and the second coil segment 40 shown in Fig. 7A after being fitted together.
Fig. 8 is a side view showing the protrusion 35 of the first coil segment 30 and the recess 46 of the second coil segment 40 according to a third embodiment of the present invention.
Fig. 9A is a side view showing the shapes of a protrusion 85 of a first coil segment 80 and a recess 96 of a second coil segment 90 according to a fourth embodiment of the present invention (a state before fitting).
Fig. 9B is a side view showing the state of the first coil segment 80 and the second coil segment 90 after being fitted together from the state shown in Fig. 9A.
Fig. 10 is a view for illustrating the connection position of fitting portions of a stator coil according to a fifth embodiment of the present invention.
Fig. 11 is a cross-sectional perspective view showing a conventional rotary electrical machine 101.
Fig. 12 is a side view showing the state of a protrusion 135 of a first coil segment 130 and a recess 146 of a second coil segment 140 constituting a stator coil 120 shown in Fig. 11 when fitted together.

### MODE FOR CARRYING OUT THE INVENTION

Hereinafter, rotary electrical machines of embodiments of the present invention will be described with reference to the drawings. The following embodiments are examples provided to describe the present invention, and will be omitted and simplified as appropriate for the sake of clarity in the description. The present invention can also be implemented in various other modes. Unless otherwise specified, each component may be singular or plural. In order to facilitate understanding of the invention, the position, size, shape, range, and the like of each component shown in the drawings may not represent the actual position, size, shape, range, and the like. Therefore, the present invention is not necessarily limited to the positions, sizes, shapes, ranges, and the like disclosed in the drawings. When there are a plurality of components having the same or similar functions, the components may be described with different subscripts attached to the same reference sign. In addition, when there is no need to distinguish between the plurality of elements, the components may be described with the subscripts omitted.

### [First embodiment]

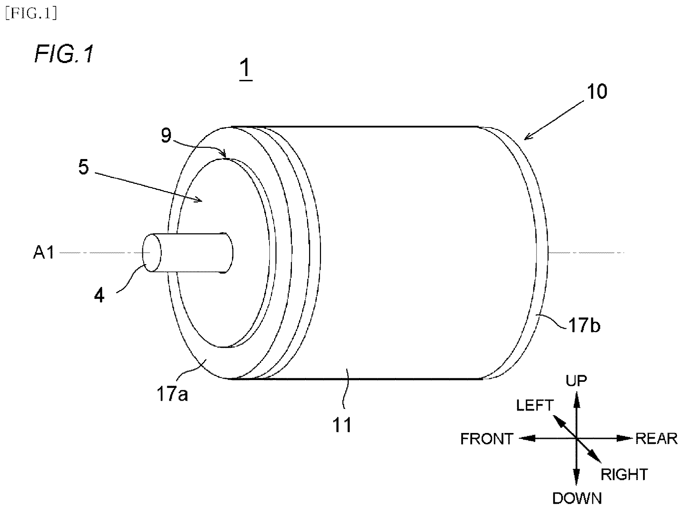

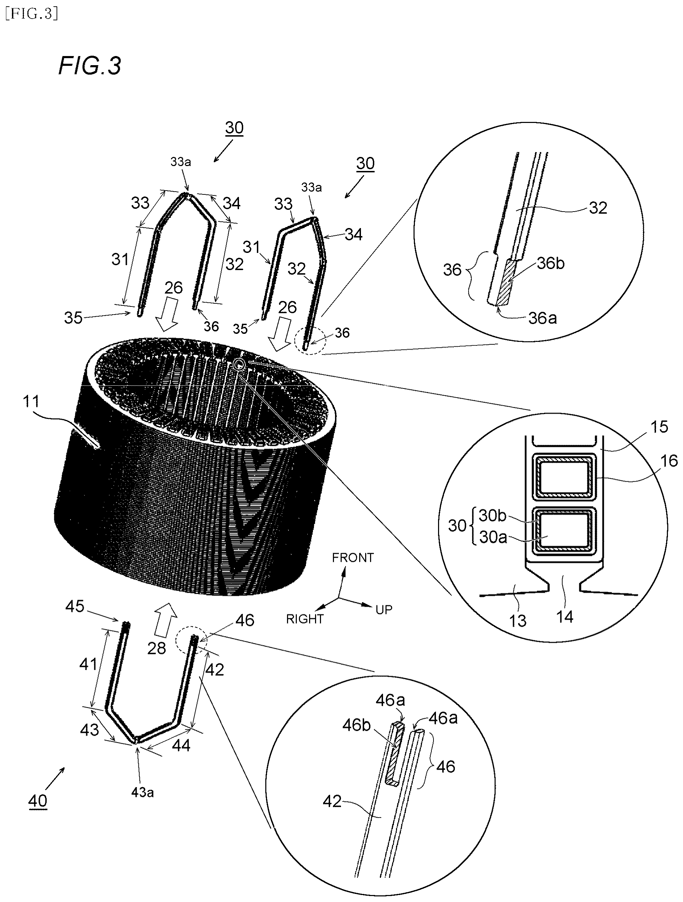

Fig. 1 is a perspective view showing a rotor 5 and a stator 10 of a rotary electrical machine 1 according to a first embodiment of the present invention. In the rotary electrical machine 1, a rotor 5 fixed to a shaft 4 rotates inside a stator 10 having a substantially cylindrical shape. When viewed in a radial direction, an outer peripheral surface of the stator 10 and an outer peripheral surface of the rotor 5 are not in contact with each other, and have a certain gap 9. The same rotor as that of the conventional rotary electrical machine 101 (see Fig. 11) can be used as the rotor 5 of the rotary electrical machine 1. The rotor 5 is formed with a plurality of permanent magnets (not visible in the figure) forming magnetic poles. The stator 10 includes a stator core 11 and a stator coil 20 (not visible in the figure) disposed in slots 14 (see Fig. 3 to be described later) formed in the stator core 11. Flanges 17a and 17b are provided at both end portions of the stator core 11 in the direction of a rotation axis A1.

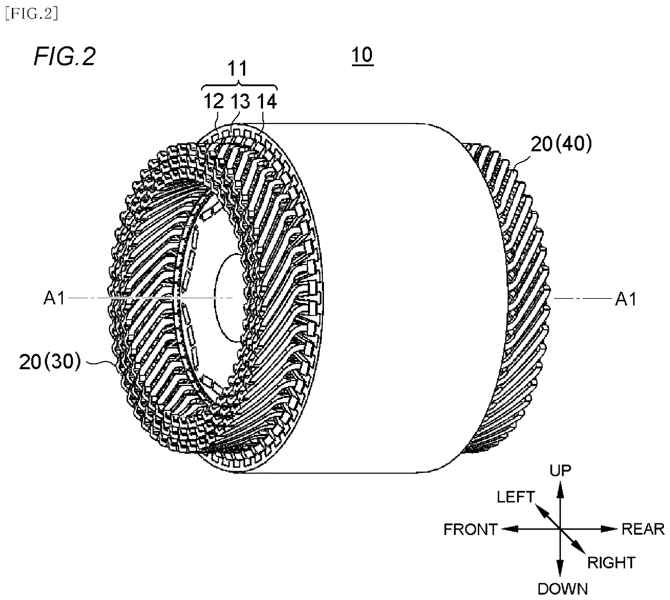

Fig. 2 is a schematic perspective view of the stator 10 according to the first embodiment. The stator core 11 is formed by laminating punched thin electromagnetic steel sheets in the direction of the rotation axis A1, a cylindrical portion 12 is formed on an outer peripheral side, and a plurality of teeth 13 protruding inward in the radial direction from the cylindrical portion 12 are formed. A space between the adjacent teeth 13 serves as the slot 14. A distributed-wound stator coil 20 is inserted into each of a plurality of the slots 14. Copper, aluminum, or the like that is highly electrically conductive is suitable for the material of the stator coil 20, and a stator coil, the surface of which is coated with an insulating paint such as an enamel coating or an inorganic material coating, is used as the stator coil 20. It is preferable that the shape of a cross-section of the stator coil 20 orthogonal to a longitudinal direction is circular or rectangular, and in the present embodiment, an enameled wire made of soft copper and formed in a rectangular shape is used. Six enameled wires are disposed in the slot 14 from an inner peripheral side to the outer peripheral side to be aligned in parallel. A segment method is employed for the stator coil 20, and a first coil segment 30 and a second coil segment 40 are connected within the slot 14.

Fig. 3 is an exploded view for describing a method for assembling the stator coil 20 according to the first embodiment of the present invention. The stator coil 20 is formed by the first coil segment 30 inserted from into the slot from one side of the stator core 11, and the second coil segment 40 inserted into the slot from the other side. Fig. 3 is a schematic perspective view showing the state of the first and second coil segments 30 and 40 before being inserted into any of the plurality of slots. Each phase of the stator coil 20 of the present embodiment is not formed from a single continuous enameled wire, but an electrically connected coil is formed by connecting a plurality of divided enameled wires. In this specification, the divided coil portions are referred to as "coil segments", and a coil in which a plurality of coil segments are physically and electrically connected is referred to as a "coil (for one phase)" or a "stator coil". The stator coil 20 of the present embodiment forms a plurality of connected wave-wound coils.

A plurality of the first coil segments 30 are inserted into the slots 14 in the direction of arrow 26 from the one side (the front side in Fig. 3) in the direction of the rotation axis A1 of the stator core 11. A plurality of the second coil segments 40 are inserted into the slots 14 in the direction of arrow 28 from the other side (the rear side in Fig. 3) in the direction of the rotation axis A1 to face the plurality of first coil segments 30. End portions of the first coil segments 30 and the second coil segments 40 are connected in internal spaces of the slots 14.

The first coil segment 30 is formed substantially in a U-shape, and includes straight portions 31 and 32 housed in the slots 14, and inclined portions 33 and 34 exposed from a slot portion by protruding from a front end face of the stator core 11 and extending in a direction intersecting an axial direction of the stator core 11. Protrusions 35 and 36 are provided on free end sides that are end portions of the straight portions 31 and 32 and that are not connected to the inclined portions 33 and 34, respectively.

The second coil segment 40 is formed substantially in a U-shape, and includes straight portions 41 and 42 housed in the slots 14, and inclined portions 43 and 44 exposed from the slot portion by protruding from a rear end face of the stator core 11 and extending in the direction intersecting the axial direction of the stator core 11. Recesses 45 and 46 are provided on free end sides that are end portions of the straight portions 41 and 42 and that are not connected to the inclined portions 43 and 44, respectively. The basic shape of the second coil segment 40 is the same as the shape of the first coil segment 30. However, the shapes of the inclined portions 33 and 34 of the first coil segment 30 and the inclined portions 43 and 44 of the second coil segment 40 differ in length or inclination angle depending on the positions of the slots 14 in which the straight portions 31, 32, 41, and 42 are housed. In the present embodiment, a plurality of the first coil segments 30 having several types of different shapes and a plurality of the second coil segments 40 having several types of different shapes are prepared.

The protrusion 35 is formed at the end portion of the straight portion 31, which are two end portions of the first coil segment 30. Similarly, the protrusion 36 is also formed at the end portion of the straight portion 32. The protrusion 36 is a projecting portion formed by removing two side surfaces in a rectangular parallelepiped shape by a predetermined length from a tip surface 36a. The shapes of the protrusion 35 and the protrusion 36 are the same.

The recesses 45 and 46 are formed at the end portions of the straight portion 41, which are two end portions of the second coil segment 40. The shapes of the recess 45 and the recess 46 are the same. The recess 46 is a groove portion formed by cutting out a region including the center of a tip surface 46a such that the tip surface 46a is recessed in the longitudinal direction by a predetermined length. Similarly, the recess 45 in which an inner wall surface is formed is also formed at the end portion of the straight portion 41.

When the stator coil 20 is assembled, the end portion (protrusion 35) of the first coil segment 30 is fitted to the end portion (recess 46) of the second coil segment 40, and the end portion (protrusion 36) is fitted to the end portion (recess 45) of the second coil segment 40. This fitting is performed by moving the protrusion 36 rearward in a longitudinal direction of the straight portion 32 toward the inside of the slot 14, and moving the recess 45 forward in the longitudinal direction of the straight portion 32 toward the inside of the slot 14. Then, the protrusion 36 is inserted and fitted to the recess 45. Similarly, the protrusion 35 is moved rearward in a longitudinal direction of the straight portion 32 toward the inside of the slot 14, and the recess 46 is moved forward in the longitudinal direction of the straight portion 32 toward the inside of the slot 14. Then, the protrusion 35 is inserted and fitted to the recess 46. The fitting position is disposed substantially at the center of the stator core 11 in the rotation axis direction (front-rear direction).

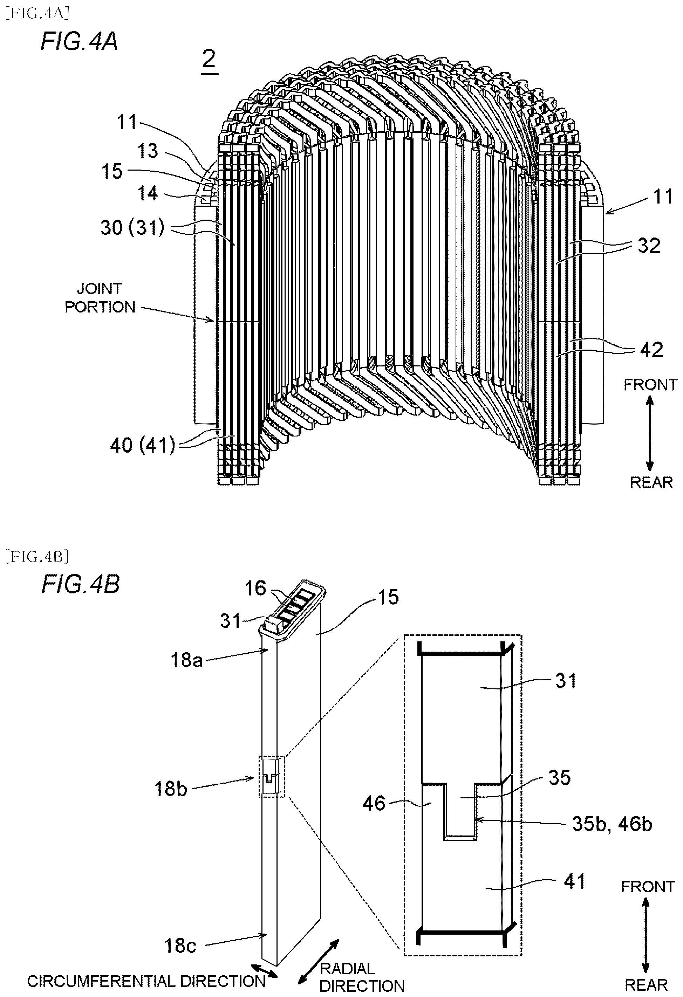

Welding, crimping, soldering, or the like is often used to join the coil segments of the stator coil 20. However, in the present embodiment, a configuration in which connection is completed solely by fitting without performing welding, crimping, soldering, or the like is implemented. In order to satisfactorily perform this fitting, the end portions (protrusions 35 and 36) of the first coil segment 30 and the end portions (recesses 45 and 46) of the second coil segment 40 are manufactured in shapes as will be described later with respect to Fig. 4 and subsequent figures. Furthermore, in the present embodiment, as shown in a right round frame shown in Fig. 3, the bobbin 15 is provided within the slot 14, and the straight portions 31 and 32 of the first coil segment 30 are inserted into the bobbin 15 and are connected within the bobbin 15.

In the right round frame shown in Fig. 3, a part of the bobbin 15 provided in the slot 14 formed between the teeth 13 and only two first coil segments 30 are shown. In reality, six first coil segments 30 are disposed in the radial direction in the bobbin 15 (see Fig. 4 to be described later for details). In the figure in the round frame, the cross-sectional shape of the first coil segment 30 is formed in a rectangular shape, with a long side direction of the cross-section disposed in a circumferential direction and a short side direction of the cross-section disposed in the radial direction. The bobbin 15 made of a synthetic resin houses the straight portions 31 and 32 of a plurality of the first coil segments 30, and hold the straight portions 31 and 32 to prevent the straight portions 31 and 32 from rattling within the slot 14. The enameled wire used in the first coil segment 30 includes a copper wire 30a and an enamel coating 30b on an outer surface portion of the copper wire 30a. The enamel coating (coating portion) 30b does not conduct electricity. In addition, the bobbin 15 is manufactured from a non-conductive and non-magnetic material, for example, a synthetic resin. Incidentally, the bobbin 15 is not necessarily required to be provided. For example, a structure in which the plurality of first coil segments 30 are regularly held within the slot 14 using a Nomex sheet or the like or other known coil holding structures may be employed.

Although not shown in Fig. 3, in a portion in which the second coil segment 40 is housed, the same disposition as the cross-sectional shape shown in the right circular frame is employed, and a bobbin of the same type as the bobbin 15 is used, and the second coil segment 40 is configured such that the cross-sectional shape orthogonal to a longitudinal direction of the straight portions 41 and 42 is formed in a rectangular shape. In addition, a plurality of (here, six) straight portions 41 and 42 are disposed in the radial direction within the bobbin.

In the assembly process of the stator 10, by inserting the plurality of first coil segments 30 from the front side of the stator core 11 and inserting the plurality of second coil segments 40 from the rear side, and then bringing vertices 43a of the plurality of second coil segments 40 into contact with a cylindrical surface of a second jig (not shown), bringing vertices 33a of the plurality of first coil segments 30 into contact with a cylindrical surface of a first jig (not shown), and moving the first jig and the second jig to approach each other in the direction of the rotation axis A1, the protrusions 35 and 36 of the first coil segments 30 are pressed and fitted to the recesses 46 and 45 of the second coil segments 40. To enable such an assembly method, the mountain shape of the inclined portions 33 and 34 of the first coil segment 30, particularly the inclination or length, is formed to be optimal. Similarly, the mountain shape of the inclined portions 43 and 44 of the second coil segment 40, particularly the inclination or length, is formed to be optimal. A cross-sectional perspective view of the stator 10 formed after such an assembly method is executed is Fig. 4.

Fig. 4A is a cross-sectional perspective view showing the state of the stator coil 20 according to the first embodiment of the present invention after being assembled. As shown in Fig. 4A, the first coil segments 30 and the second coil segments 40 are connected at a joint portion substantially in the vicinity of the center of the stator core 11 in the rotation axis direction. Within the bobbin 15 on the front side of the joint portion, a total of six straight portion 32, straight portion 31, and so on of the first coil segments 30 are alternately aligned from a radially inner side (a side closer to the rotation axis A1) to a radially outer side, and similarly, within the bobbin 15 on the rear side of the joint portion, a total of six straight portion 42, straight portion 41, and so on of the second coil segments 40 are alternately aligned from the radially inner side to the radially outer side.

Fig. 4B is a perspective view of the bobbin 15 alone, and shows a partial transparent view of a fitting portion of the stator coil 20 within the bobbin 15 in a dotted line frame. Here, among six copper wires that are housed, only one copper wire denoted by reference sign 31, and the other copper wires are not shown. It is important that the bobbin 15 is made of a non-magnetic material so as not to affect the magnetic field generated by the coil, and here, the bobbin 15 is formed as an integral structure of synthetic resin. The bobbin 15 is formed such that a rectangular cross-section is divided into six sections corresponding to the cross-sectional shape of the first coil segment 30 and the second coil segment 40, and each section serves as a conduit penetrating through the bobbin 15 from one side (front side) to the other side (rear side). The first coil segment 30 and the second coil segment 40 are joined together at a central portion of each conduit of the bobbin 15, namely, in the vicinity of arrow 18b in the figure. Incidentally, the joint location between the straight portion 31 (or 32) of the first coil segment 30 and the straight portion 42 (or 41) of the second coil segment 40 is not limited to the central portion of the bobbin 15 in a longitudinal direction shown in the vicinity of arrow 18b, and can be set at any other position, for example, any position within a range from arrow 18a to arrow 18c. In addition, the lengths of the straight portions of the first coil segment 30 and the second coil segment 40 should be appropriately set in accordance with the setting of the joint position.

An enlarged view on the right side of Fig. 4B is a transparent view of the vicinity of the joint location indicated by reference sign 18b. From this enlarged view, the positional relationship between the protrusion 35 and the recess 46 within the bobbin 15 can be seen. Here, projection side surfaces 35b of the protrusion 35 and inner wall surfaces 46b of the recess 46 are disposed to become surfaces extending in the rotation axis direction (front-rear direction) and the radial direction. In this manner, by disposing the main fitted surfaces (the projection side surfaces 35b and the inner wall surfaces 46b) so as to be orthogonal to a rotation direction (circumferential direction) of the rotary electrical machine 1, a force applied during acceleration or deceleration of the rotor 5 applies a force to cause the straight portion 31 (or 32) of the first coil segment 30 to adhere to the straight portion 42 (or 41) of the second coil segment 40, and therefore, a situation in which the protrusion 35 and the recess 46 (or the protrusion 36 and the recess 45) come off from each other can be effectively avoided.

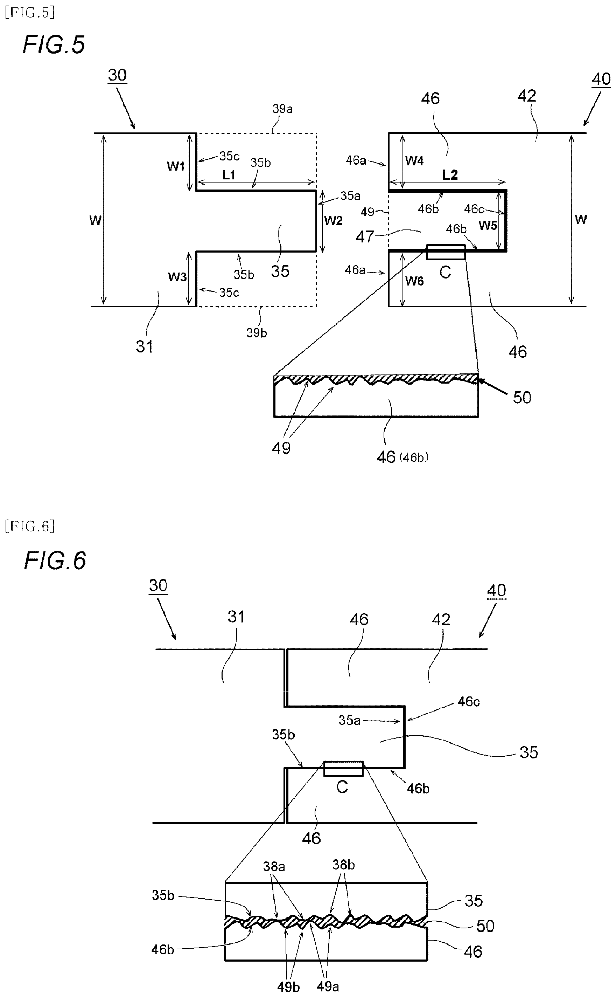

Fig. 5 is a side view showing the shapes of the protrusion 35 formed at one end of the straight portion 31 of the first coil segment 30 and the recess 46 formed at one end of the straight portion 42 of the second coil segment 40 according to the first embodiment of the present invention. Here, a state in which the first coil segment 30 and the second coil segment 40 before being joined (fitted) together is shown. At the end portion of the straight portion 31 of the first coil segment 30, rectangular parallelepiped portions indicated by dotted line portions 39a and 39b are cut off from the enameled wire before processing, as the result of which the remaining portion forms the protrusion 35. A known method such as pressing or grinding can be used as the cut-off manufacturing method. As a result of such processing, two projection side surfaces 35b extending a direction parallel to the insertion direction, a tip surface 35a extending in a direction orthogonal to the insertion direction and connecting edges of the two projection side surfaces 35b, and two stepped surfaces 35c are formed at the end portion of the straight portion 31. The two stepped surfaces 35c are surfaces formed on a side of the projection side surfaces 35b that is spaced apart from the tip surface 35a, and are formed to intersect the other edges of the projection side surfaces 35b at a right angle.

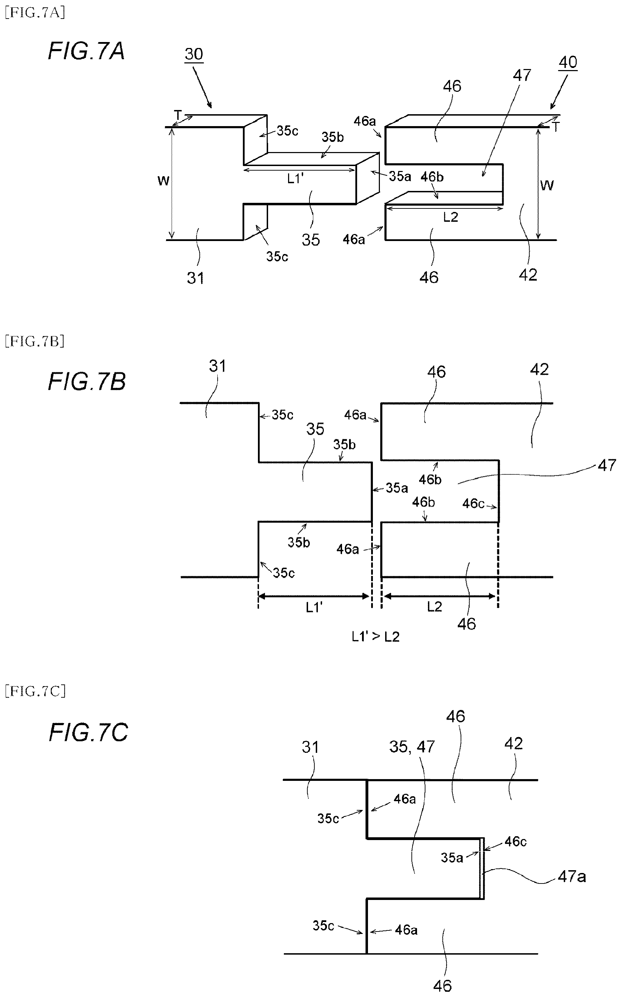

The length of the first coil segment 30 in the longitudinal length is determined by cutting an enameled wire having a squire bar shape and having a thickness T (see Fig. 7 to be described later for reference sign) and a width W. The tip surface 35a is a part of the cut surface of the enameled wire, and no enamel layer exists thereon. In addition, since the two projection side surfaces 35b parallel to each other and the two stepped surfaces 35c are scraped portions, no enamel layer exist thereon. In the present embodiment, the width of the tip surface 35a of the first coil segment 30 is W2, and the length of the projection side surfaces 35b in the front-rear direction is L1. In addition, the two stepped surfaces are located at the same position when viewed in the longitudinal direction (insertion direction), and the widths of the two stepped surfaces are W1 and W3. In the present embodiment, in view of strength as well, W1 = W3 and W2 ≥ W1 and W2 ≥ W3.

In the straight portion 42 on the second coil segment 40 side, the recess (groove portion) 46 is formed by forming a space 47 that is hollowed out in a rectangular parallelepiped shape so as to be recessed inward in the longitudinal direction (a direction opposite to the insertion direction) of the straight portion 42 from a tip portion indicated by dotted line 49. A known method such as pressing or cutting can be used as the method for forming the recess 46. As a result of such processing, two inner wall surfaces 46b parallel to the insertion direction, a bottom surface 46c extending in a direction orthogonal to the insertion direction of the protrusion 35 and connecting the two inner wall surfaces 46b of the protrusion 35, and two abutment surfaces 46a formed to be orthogonal to edges of the inner wall surfaces 46b that are spaced apart from the bottom surface are formed at the end portion of the straight portion 42.

The length of the second coil segment 40 in the longitudinal length is determined by cutting an enameled wire having a squire bar shape and having the thickness T (see Fig. 7 to be described later for reference sign) and the width W. The abutment surfaces 46a are a part of the cut surface of the enameled wire, and no enamel layer exists on the surfaces. In addition, since the space 47 between the two inner wall surfaces 46b parallel to each other is a cutout portion, no enamel layer exists on the inner wall surfaces 46b and the bottom surface 46c. The width of the bottom surface 46c of the second coil segment 40 is W5, and the length of the inner wall surfaces 46b in the front-rear direction is L2. In addition, the widths of the two stepped surfaces are W4 and W6, and here, are formed to satisfy W4 = W6 and W5 ≥ W4 and W5 ≥ W6.

A second metal layer having a hardness lower than the hardness of the surface (first metal layer) of the first coil segment 30 is formed on the entirety of the two inner wall surfaces 46b. Here, as the second metal layer, a metal plating layer 50 is formed by using a plating technique. It is optional whether the metal plating layer 50 is formed on the bottom surface 46c (first metal layer). If it is advantageous from a manufacturing standpoint to form a plating layer on each of the inner wall surfaces 46b, the abutment surfaces 46a, and the bottom surface 46c during the plating process of the metal plating layer 50, the metal plating layer 50 may be formed on all of these surfaces, or the metal plating layer 50 may be formed only on the inner wall surfaces 46b and the bottom surface 46c.

A drawn-out view on the lower side of Fig. 5 is an enlarged view of part C of the inner wall surface 46b. The metal portion of the inner wall surface 46b of the second coil segment 40 is made of the same first metal (for example, a high-purity metal such as oxygen-free copper) as the first coil segment 30. As indicated by arrow 49, micro-level irregularities are formed on the surface of the metal portion when punched using a mold or the like (incidentally, irregularities 49 are shown extremely large in Fig. 5; however, in reality, the irregularities 49 are so small to be invisible to the naked eye). The metal plating layer 50 is formed on the inner wall surface 46b. A known method, for example, electrolytic plating and electroless plating can be used can be used as the method for manufacturing the metal plating layer 50. The hardness of the metal plating layer 50 can be adjusted by the plating material or manufacturing method, and it is preferable that the hardness is lower than the hardness of the metal or plating of the protrusion 35 provided at one end of the first coil segment 30. The material of the metal plating layer 50 is, for example, gold, silver, nickel, tin, or zinc, and it is preferable that the material is tin plating from the viewpoint of hardness, conductivity, and cost.

Fig. 6 is a side view showing the state of the first coil segment 30 and the second coil segment 40 7A after being joined together. The metal plating layer 50 is formed on the inner wall surfaces 46b of the second coil segment 40. The metal plating layer 50 is made of a material having a lower hardness than the metal portion of the protrusion 35 of the first coil segment 30, particularly the member of the projection side surfaces 35b of the protrusion 35. The first coil segment 30 and the second coil segment 40 are fitted together by fitting the protrusion 35 into the recess 46 such that the first coil segment 30 and the second coil segment 40 approach each other from the state shown in Fig. 5. Then, during this fitting, the metal plating layer 50 undergoes plastic deformation, thereby penetrating into micro-level projections 38a or depressions 38b existing on the projection side surfaces 35b of the protrusion 35 and exhibiting the effect of filling gaps between the projection side surfaces 35b and the metal plating layer 50. Since the metal plating layer 50 is formed in advance on the recess 46 side, the inner wall surfaces 46b and the metal plating layer 50 are in firm contact with each other, and no gaps exist therebetween, particularly between the metal plating layer 50 and micro-level projections 49a or grooves 49b existing on the inner wall surfaces 46b. The metal plating layer 50 that is plastically deformed in this manner significantly improves the physical and electrical contact between the projection side surfaces 35b and the inner wall surfaces 46b of the recess 46.

In the present embodiment, since the contact area of regions (the projection side surfaces 35b and the inner wall surfaces 46b) that greatly affect the electrical contact resistance between the first coil segment 30 and the second coil segment 40 can be increased, the substantial conduction path of the stator coil can be expanded, thereby reducing the contact resistance. The physical fitting force of the fitting region between the protrusion 35 and the recess 46 can also be increased by increasing the contact area between the first coil segment 30 and the second coil segment 40.

### [Effects]

In the rotary electrical machine of the present embodiment, since the protrusion 35 provided at the end portion of the first coil segment 30 and the recess 46 provided at the end portion of the second coil segment 40 are fitted together within the slot 14 of the stator core 11, and the surface of the metal plating layer 50 partially undergoes plastic deformation at the fitting portion where the protrusion 35 and the recess 46 are fitted together, a plurality of contact points are generated at the protrusion 35 and the recess 46, and therefore the contact area between the first coil segment 30 and the second coil segment 40 can be increased. As a result, since the conductivity between the first coil segment 30 and the second coil segment 40 can be increased to improve reliability, and the degree of substantial contact between both the coil segments can be improved, the mechanical fitting force between the protrusion 35 and the recess 46 can be improved.

In Figs. 5 and 6, the shapes of the protrusion 35 of the first coil segment 30 and the recess 46 of the second coil segment 40 and the fitting state thereof have been described above. Although not described here, the shape of the protrusion 36 of the first coil segment 30 and the shape of the recess 45 of the second coil segment 40 are the same as the shapes of the protrusion 35 and the recess 46, respectively, and the fitting state is also the same. In addition, a metal plating layer is not formed on the protrusion 36 side, but the metal plating layer 50 is formed on at least the inner wall surfaces of the recess 45. In this manner, at the fitting portion between the first coil segment 30 and the second coil segment 40 according to the present embodiment, the metal plating layer 50 is formed on the side of the recesses 45 and 46 of the contact portion, and therefore, the first coil segment 30 and the second coil segment 40 can be satisfactorily fitted together electrically and mechanically. Compared to a rotary electrical machine in which a paste-like binder containing conductive particles that is used in conventional rotary electrical machines is applied to the protrusions and the recesses and is thermally cured to increase connection strength, in the stator 10 of the present invention, the disassembly of the stator coil 20 is facilitated, and therefore, the separability of components when the rotary electrical machine is disposed of is improved, the reuse of materials is facilitated, and excellent recyclability is provided. Furthermore, during the manufacture of the stator coil 20 of the present embodiment, no paste-like binder is used, and there is no need to apply heat as in the curing process when paste is used, thereby not only facilitating manufacturing but also contributing to reducing the environmental load. Therefore, an environmentally friendly rotary electrical machine can be realized.

The first embodiment described above is not limited to the shapes shown in the figures, and various modifications can be made. For example, Figs. 3 to 6 show an embodiment in which the protrusions 35 are provided at both ends of the first coil segment 30 and the recesses 46 are provided at both ends of the second coil segment 40. However, the present invention is not limited thereto. The protrusion 35 may be formed at one end of the first coil segment 30 and a recess may be formed at the other end, and similarly, the recess 45 may be formed at one end of the second coil segment 40, and a protrusion may be formed at the other end.

In the first embodiment, an embodiment in which the first coil segments 30 and the second coil segments 40 are inserted into any of the plurality of slots 14 of the stator core 11 and then are fitted together to form the stator coil 20 in a distributed winding manner has been described. However, the present invention is not limited thereto, and the first coil segments 30 and the second coil segments 40 may be inserted and fitted together in two adjacent slots 14 among the plurality of slots 14 of the stator core 11 to form the stator coil 20 in a concentrated winding manner.

### [Second embodiment]

Fig. 7A is a perspective view showing the shapes of the protrusion 35 and the recess 46 according to a second embodiment of the present invention, Fig. 7B is a side view showing the state before joining, and Fig. 7C is a side view showing a joined state. The differences from the first embodiment shown in Figs. 5 and 6 are that the metal plating layer 50 is not formed on the inner wall surfaces 46b, and a length L1' of the protrusion 35. The width W and the thickness T of the coil segment 30 and the second coil segment 40 are the same as those in the first embodiment. Here, the length L1' is made slightly shorter than the length L1 in Fig. 5 to satisfy the relationship L1' < L1. As indicated by arrow 47a in Fig. 7C, during fitting, the tip surface 35a of the protrusion 35 is configured not to come into contact with the bottom surface 46c of the recess 46, so that a slight gap is formed. When formed in this manner, the two stepped surfaces 35c of the protrusion 35 inserted into the space 47 of the recess 46 reliably comes into surface contact with the two abutment surfaces 46a of the recess 46.

As described above, in the second embodiment of the present invention, since the length L1' of the protrusion 35 is made slightly shorter than the length L2 of the recess 46, reliable contact regions between the first coil segment 30 and the second coil segment 40 can be ensured on four surfaces of each coil segment. Namely, in the first coil segment 30, the two projection side surfaces 35b and the two stepped surfaces 35c become contact regions, and in the second coil segment 40, the two abutment surfaces 46a and the two inner wall surfaces 46b become contact regions. In the second embodiment, since sufficient electrical and physical contact regions can be ensured, the rotary electrical machine 1 with improved conductivity can be realized by reducing the resistance value of the stator coil 20 through the expansion of the conduction path.

### [Third embodiment]

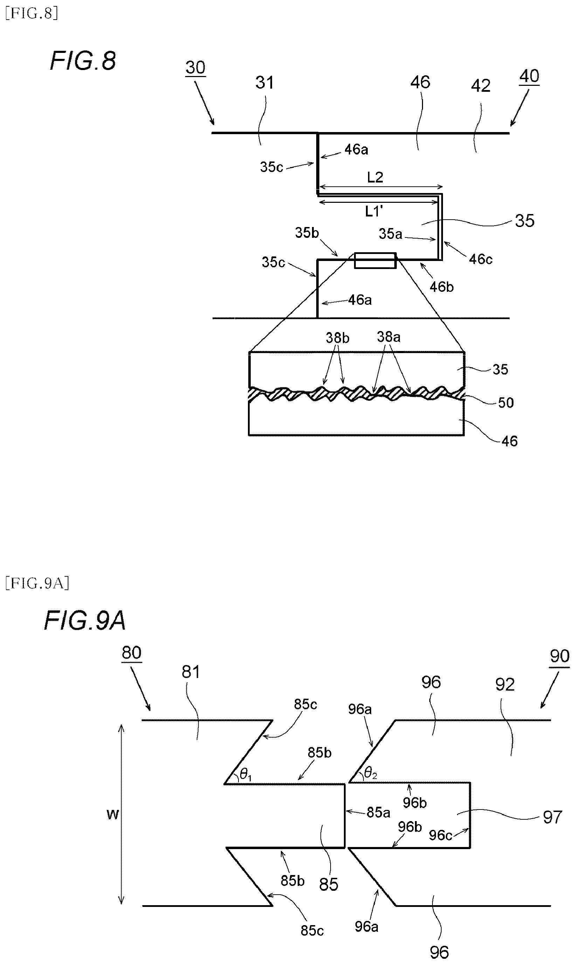

Fig. 8 is a cross-sectional view corresponding to when the protrusion 35 of the first coil segment 30 and the recess 46 of the second coil segment 40 according to a third embodiment are fitted together. The structure of the fitting portion is configured by combining the second embodiment described above with the first embodiment. Namely, the length L1' of the protrusion 35 is made slightly shorter than the length L2 of the inner wall surfaces 46b, and similarly to the first embodiment, the metal plating layer 50 is formed on at least one side of the fitting surfaces formed by the protrusion 35 and the recess 46. Here, similarly to the first embodiment, the metal plating layer 50 is formed on the side of the two inner wall surfaces 46b of the recess 46. The material or hardness of the metal plating layer 50 is the same as that in the first embodiment. Therefore, similarly to the structure described with reference to Fig. 6, since the metal plating layer 50 on the inner wall surfaces 46b of the second coil segment has the effect of being able to increase the contact area between the micro-level projections 38a and depressions 38b of the projection side surfaces 35b of the first coil segment 30, the projection side surfaces 35b and the inner wall surfaces 46b can maintain a good physical and electrical contact state. Incidentally, it is optional whether a metal plating layer is also formed on the two abutment surfaces 46a of the recess 46. When a metal plating layer is formed on the abutment surfaces 46a, it is important that the hardness is reduced than that of the material (first metal) of the stepped surfaces 35c of the protrusion 35, and therefore, it is preferable that the metal plating layer 50 made of the same second metal is formed on the abutment surfaces 46a and the inner wall surfaces 46b. In addition, it is optional whether the metal plating layer 50 is also formed on the bottom surface 46c; however, if manufacturing is facilitated by also applying plating to the bottom surface 46c during the plating process, the metal plating layer 50 may also be formed on the bottom surface 46c.

In the fitting portion according to the third embodiment, the stepped surfaces 35c at the base of the protrusion 35 and the abutment surfaces 46a at the tip of the recess 46 reliably come into contact with each other, thereby ensuring the contact area, and the contact area is further increased by the metal plating layer 50 formed on the projection side surfaces 35b of the protrusion 35 and the inner wall surfaces 46b of the recess 46, and therefore, the conduction path for electricity can be expanded. As a result, since the conduction reliability of the stator coil 20 can be improved, and the fitting force of the fitting portion formed by the protrusion 35 and the recess 46 can be improved, an improvement in conduction performance and an improvement in mechanical strength can be achieved, so that the lifespan of the rotary electrical machine 1 can be extended and reliability can be increased.

### [Fourth embodiment]

Fig. 9A is a cross-sectional view showing the shape of a protrusion 85 of a first coil segment 80 and the shape of a recess 96 of a second coil segment 90 according to a fourth embodiment of the present invention. Here, stepped surfaces 85c serving as the base of the protrusion 35 are formed in a tapered shape so as to obliquely intersect the longitudinal direction at an angle θ1, and abutment surfaces 96a of the recess 46 that face the stepped surfaces 85c are formed in a reverse tapered shape with a tip angle θ2. The shape of two projection side surfaces 85b and a tip surface 85a of the protrusion 85 of the first coil segment 80 is the same as the shape of the protrusion 35 of the second and third embodiments. The shape of two inner wall surfaces 96b and a bottom surface 96c of the recess 96 of the second coil segment is the same as the shape of the recess 46 of the second and third embodiments, and a space 97 of a groove formed by the recess 96 has the same shape as that space 47 of the groove formed by the recess 46 of the second and third embodiments.

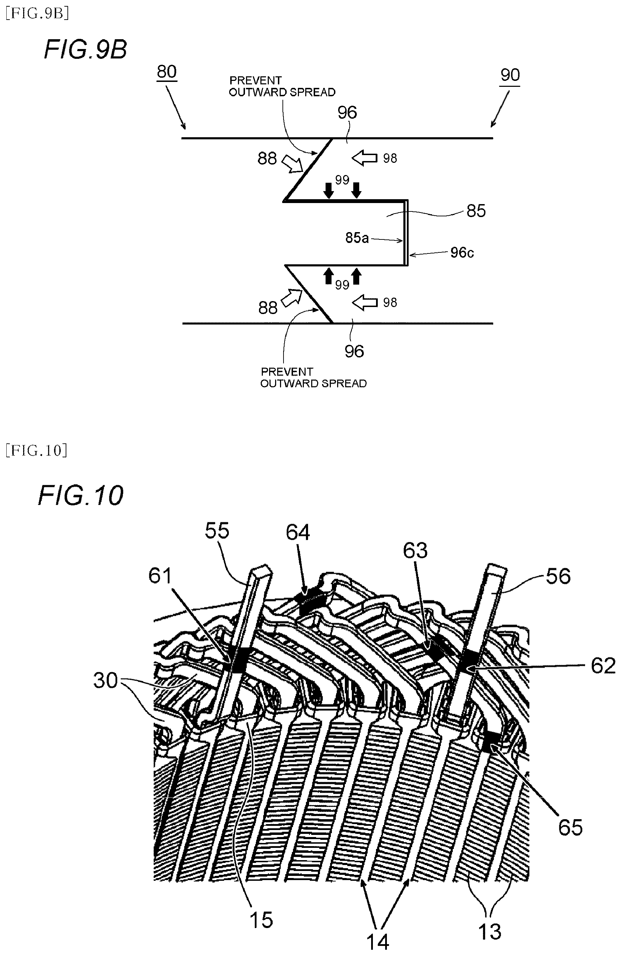

Fig. 9B is a side view showing the state of the first coil segment 80 and the second coil segment 90 after being fitted together from the state. Due to the reverse tapered shape of the stepped surfaces 85c and the tapered shape of the abutment surfaces 96a, when the protrusion 85 is inserted into the recess 96 as indicated by arrow 98, the force of the stepped surfaces 85c in the direction of arrow 88 generates a force that presses the recess 96 in the direction of arrow 99. Namely, the reverse tapered shape of the abutment surfaces 96a suppresses the force that opens the abutment surfaces 96a outward (the force that opens the abutment surfaces 96a in a direction opposite arrow 99). In addition, since the contact area between the stepped surfaces 85c and the abutment surfaces 96a due to the tapered shape is larger than that in the first to third embodiments, the fitting force of a fitting portion is improved, and electrical contact resistance can be further reduced.

Incidentally, similarly to the first embodiment, a metal plating layer (not shown) having a hardness lower than the hardness of metal forming the first coil segment 80 and the second coil segment 90 may be formed on at least one of the projection side surfaces 85b and the inner wall surfaces 96b. When the metal plating layer is formed in this manner, the surface of the metal plating layer 50 partially undergoes plastic deformation when the protrusion 85 and the recess 96 are fitted together, and therefore, it is possible to obtain the effect of filling a plurality of irregularities in the protrusion 85 and the recess 96, thereby filling gaps between the projection side surfaces 85b and the metal plating layer.

The present invention has been described above using a plurality of the embodiments; however, in the embodiments of the present invention, different types of metal plating may be applied to the respective contact surfaces of the protrusions 35 and 85 and the recesses 46 and 96. Metal plating has the effect of reducing oxidation of the joint portion, and the dimensional tolerances of the protrusion and the recess can be adjusted to appropriate values by the metal plating, so that joint strength between the protrusion and the recess is improved. In addition, since the other metal plating layer having a lower hardness than one metal plating layer provides a lubricating function when the protrusion is inserted, the press-fitting force when the projecting portion is inserted into the groove portion can be reduced. As a result, energy consumption during manufacturing and assembly can be suppressed, and the press-fitting time can be shortened.

### [Fifth embodiment]

Fig. 3 shows that the stator coil 20 is formed by connecting the first coil segment 30 and the second coil segment 40; however, the shapes of the protrusions 35 and 85 and the recesses 46 and 96 described in the first to fifth embodiments and the structure in which the metal plating layer is formed can be applied not only to the disposition within the slot 14 of the stator core 11 but also to the connection of two coil segments at an outer portion of the slot 14 in a similar manner. Fig. 10 is a view for showing an example of application to the connection location, and is a partial perspective view of the stator 10.

In Fig. 10, a plurality of the first coil segments 30 are disposed. Lead wires 55 and 56 are lead-out portions of the stator coil 20 of each phase, and are coil segments dedicated to lead-out that are led out substantially straight from fitting portions. For example, a configuration in which irregular portions corresponding to the protrusion 35 and the recess 46 are provided at black-filled portions 61 and 62 of the lead wires 55 and 56 and connect the divided lead wires 55 and 56 may be employed. In addition, for example, a configuration in which, similarly, irregular portions are provided at filled-in portions 63 and 64 of the first coil segment and connect the divided first coil segment 30 may be employed. All the filled-in portions 61 to 64 are provided at portions of the stator core 11 that protrude outward in the rotation axis direction; however, a configuration in which irregular portions are provided at a portion that partially overlaps within the slot 14 of the stator core 11, for example, in the vicinity of a filled-in portion 65, and connect the coil segment may be employed. Incidentally, Fig. 10 shows only the first coil segment 30 side; however, a configuration in which, similarly, irregular portions are provided and connected at the corresponding location on the second coil segment 40 side can also be employed.

### REFERENCE SIGNS LIST

1 Rotary electrical machine
2 Housing
3 Attachment portion
4 Shaft
5 Rotor
10 Stator
11 Stator core
12 Cylindrical portion
13 Teeth
14 Slot
15 Bobbin
16 Slot insulating material
17a, 17b Flange
20 Stator coil
30 First coil segment
30a Copper wire
30b Enamel coating
31, 32 Straight portion (first flat wire)
33, 34 Inclined portion
35, 36 Protrusion (projecting portion)
35a Tip surface
35b, 36b Projection side surface
35c Stepped surface
38a Projection
38b Groove
39a, 39b Cut-off portion
40 Second coil segment
40a Copper wire
40b Enamel coating
41, 42 Straight portion (second flat wire)
43, 44 Inclined portion
45, 46 Recess (groove portion)
46a Abutment surface
46b Inner wall surface
46c Bottom surface
47 Space (of recess)
49 (micro-level) Irregularities
49a Projection
49b Groove
50 Metal plating layer
55, 56 Lead wire
80 First coil segment
80a Copper wire
80b Enamel coating
81 Straight portion
85 Protrusion (projecting portion)
85a Tip surface
85b Projection side surface
85c Stepped surface
90 Second coil segment
92 Straight portion
96 Recess (groove portion)
96a Abutment surface
96b Inner wall surface
96c Bottom surface
101 Rotary electrical machine
111 Stator core
130 First coil segment
135 Protrusion
140 Second coil segment
146 Recess

## Claims

1. A rotary electrical machine, comprising:
a rotor fixed to a rotating shaft;
a stator including a stator coil formed by connecting a plurality of coil segments made of a metal, and a stator core in which a plurality of slots that house a part of said stator coil is formed;
wherein each of said coil segments is inserted into said slot from one side or the other side of said stator core in a direction of said rotating shaft, and includes a straight portion that is housed in said slot, and an inclined portion disposed outside said slot by protruding from an end face of said stator core and extending in a direction intersecting an axial direction of said stator core;
a first coil segment having a protrusion at one end and a second coil segment having a recess at one end are provided as said coil segments; and
said protrusion or said recess includes a first metal layer on at least one side of fitting surfaces formed by said protrusion and said recess, and a second metal layer having a lower hardness than said first metal layer on the other side.

2. The rotary electrical machine according to claim 1,
wherein said first coil segment and said second coil segment are made of the same metal, and a plating layer made of a metal having a lower hardness than said first coil segment is formed as said second metal layer on an inner wall surface of said recess of said second coil segment that is parallel to an insertion direction.

3. The rotary electrical machine according to claim 1,
wherein said first coil segment and said second coil segment are made of the same metal, and a plating layer made of a metal having a higher hardness than an inner wall surface of said recess of said second coil segment that is parallel to an insertion direction is formed as said second metal layer on a projection side surface of said protrusion of said first coil segment that is parallel to an insertion direction.

4. The rotary electrical machine according to claim 2 or 3,
wherein a length of said projection side surface in the insertion direction that is parallel to the insertion direction of said protrusion of said first coil segment is formed to be shorter than a length of said inner wall surface in the insertion direction that is parallel to the insertion direction of said recess.

5. The rotary electrical machine according to claim 4,
wherein said protrusion of said first coil segment includes two projection side surfaces parallel to the insertion direction, a tip surface extending in a direction orthogonal to the insertion direction and connecting said two projection side surfaces, and said stepped surfaces formed to intersect said projection side surfaces,
said recess of said second coil segment includes two inner wall surfaces parallel to the insertion direction, a bottom surface extending in a direction orthogonal to the insertion direction and connecting said two inner wall surfaces, and two abutment surfaces formed on a side of said inner wall surfaces that is spaced apart from said bottom surface,
an angle between said stepped surface and said projection side surface of said first coil segment is formed at less than 90 degrees, and
an angle between said inner wall surface and said abutment surface of said second coil segment is formed at less than 90 degrees.

6. The rotary electrical machine according to claim 5,
wherein each of said first coil segment and said second coil segment includes a conductor portion made of a metal and a coating portion made of a non-conductor that coats an outside of said conductor portion, and
said tip surface and said projection side surfaces of said first coil segment are formed at portions not covered with said coating portion, and said inner wall surfaces and said abutment surfaces of said second coil segment are formed at portions not covered with said coating portion.

7. A rotary electrical machine, comprising:
a rotor fixed to a rotating shaft; and
a stator including a stator coil formed by connecting a plurality of coil segments made of a metal, and a stator core in which a plurality of slots that house a part of said stator coil is formed;
wherein each of said coil segments is inserted into said slot from one side or the other side of said stator core in a direction of said rotating shaft, and includes a straight portion that is housed in said slot, and an inclined portion disposed outside said slot by protruding from an end face of said stator core and extending in a direction intersecting an axial direction of said stator core;
a first coil segment including a protrusion at one end and a second coil segment including a recess at one end are provided as said coil segments; and
a length of a projection side surface of said protrusion of said first coil segment in an insertion direction, said projection side surface being parallel to the insertion direction, is formed to be shorter than a length of an inner wall surface of said recess that is parallel to an insertion direction.

8. The rotary electrical machine according to claim 7,
wherein said protrusion of said first coil segment includes two projection side surfaces parallel to the insertion direction, a tip surface extending in a direction orthogonal to the insertion direction and connecting said two projection side surfaces, and two stepped surfaces formed to intersect said projection side surfaces,
said recess of said second coil segment includes two inner wall surfaces parallel to the insertion direction, a bottom surface extending in a direction orthogonal to the insertion direction and connecting said two inner wall surfaces, and two abutment surfaces formed on a side of said inner wall surfaces that is spaced apart from said bottom surface,
an angle between said stepped surface and said projection side surface of said first coil segment is formed at less than 90 degrees, and
an angle between said inner wall surface and said abutment surface of said second coil segment is formed at less than 90 degrees.

9. The rotary electrical machine according to claim 8,
wherein a bobbin made of a non-conductive material is disposed to align a plurality of coils in a radial direction of said slot,
said first coil segment and said second coil segment are inserted into said bobbin, and
said protrusion of said first coil segment and said recess of said second coil segment are fitted together by press-fitting in a direction parallel to the direction of said rotating shaft, and a fitting position is formed to be located inside said bobbin.

10. The rotary electrical machine according to claim 9,
wherein said protrusion includes a first metal layer on at least a fitting surface with said recess, and said recess includes a second metal layer on at least a fitting surface with said protrusion, said second metal layer having a lower hardness than said first metal layer.

11. The rotary electrical machine according to claim 10,
wherein said first coil segment and said second coil segment are made of the same metal, and a plating layer made of a metal having a lower hardness than said projection side surface of said first coil segment is formed on said inner wall surface of said second coil segment.

## Amended claims

### Amended claims under Art. 19.1 PCT

1. A rotary electrical machine, comprising:
a rotor fixed to a rotating shaft;
a stator including a stator coil formed by connecting a plurality of coil segments made of a metal, and a stator core in which a plurality of slots that house a part of said stator coil is formed;
wherein each of said coil segments is inserted into said slot from one side or the other side of said stator core in a direction of said rotating shaft, and a first coil segment having a protrusion at one end and a second coil segment having a recess at one end are provided as said coil segments;
said first coil segment and said second coil segment are made of the same metal;
a fitting surface formed on one side of said protrusion and said recess is a first metal layer in which the metal material of said coil segment is exposed, and a fitting surface on the other side is a second metal layer formed on the metal material of said coil segment by plating,
said second metal layer is formed by plating using a metal having a lower hardness than said first metal layer; and
said protrusion and said recess are connected by bringing said first metal layer and said second metal layer into contact with each other.

2. The rotary electrical machine according to claim 1,
wherein said second metal layer is formed on an inner wall surface of said recess of said second coil segment that is parallel to an insertion direction.

3. The rotary electrical machine according to claim 1 or 2,
wherein a length of said projection side surface in the insertion direction that is parallel to the insertion direction of said protrusion of said first coil segment is formed to be shorter than a length of said inner wall surface in the insertion direction that is parallel to the insertion direction of said recess.

4. The rotary electrical machine according to claim 3,
wherein said protrusion of said first coil segment includes two projection side surfaces parallel to the insertion direction, a tip surface extending in a direction orthogonal to the insertion direction and connecting said two projection side surfaces, and two stepped surfaces formed to intersect said projection side surfaces,
said recess of said second coil segment includes two inner wall surfaces parallel to the insertion direction, a bottom surface extending in a direction orthogonal to the insertion direction and connecting said two inner wall surfaces, and two abutment surfaces formed on a side of said inner wall surfaces that is spaced apart from said bottom surface,
an angle between said stepped surface and said projection side surface of said first coil segment is formed at less than 90 degrees in order that said stepped surfaces are formed obliquely with respect to the insertion direction, and
an angle between said inner wall surface and said abutment surface of said second coil segment is formed at less than 90 degrees in order that said abutment surfaces are formed obliquely with respect to the insertion direction.

5. The rotary electrical machine according to claim 4,
wherein each of said first coil segment and said second coil segment includes a conductor portion made of a metal and a coating portion made of a non-conductor that coats an outside of said conductor portion, and
said tip surface and said projection side surfaces of said first coil segment are formed at portions not covered with said coating portion, and said inner wall surfaces and said abutment surfaces of said second coil segment are formed at portions not covered with said coating portion.

6. A rotary electrical machine, comprising:
a rotor fixed to a rotating shaft, and
a stator including a stator coil formed by connecting a plurality of coil segments made of a metal, and a stator core in which a plurality of slots that house a part of said stator coil is formed;
wherein each of said coil segments having a first coil segment having a protrusion at one end and a second coil segment having a recess at one end are provided as said coil segments;
said first coil segment and said second coil segment are made of the same metal;
a mating surface is formed on one side of said protrusion and recess, which is a first metal layer formed by plating;
said second metal layer is formed on the other side of said protrusion or recess as plating using a metal having a lower hardness than said first metal layer; and
said protrusion and said recess are connected by bringing said first metal layer and said second metal layer into contact with each other.

7. A rotary electrical machine, comprising:
a rotor fixed to a rotating shaft, and
a stator including a stator coil formed by connecting a plurality of coil segments made of a metal, and a stator core in which a plurality of slots that house a part of said stator coil is formed;
said coil segment having a first coil segment having a protrusion at one end and a second coil segment having a recess at one end are provided as said coil segments;
said protrusion of said first coil segment includes two projection side surfaces parallel to the insertion direction, a tip surface extending in a direction orthogonal to the insertion direction and connecting said two projection side surfaces, and two stepped surfaces formed to intersect said projection side surfaces;
said recess of said second coil segment includes two inner wall surfaces parallel to the insertion direction, a bottom surface extending in a direction orthogonal to the insertion direction and connecting said two inner wall surfaces, and two abutment surfaces formed on a side of said inner wall surfaces that is spaced apart from said bottom surface;
an angle between said stepped surface and said projection side surface of said first coil segment is formed at less than 90 degrees in order that said stepped surfaces are formed obliquely with respect to the insertion direction; and
an angle between said inner wall surface and said abutment surface of said second coil segment is formed at less than 90 degrees in order that said abutment surfaces are formed obliquely with respect to the insertion direction.

8. The rotary electrical machine according to claim 7,
a length of a projection side surface of said protrusion of said first coil segment in an insertion direction, said projection side surface being parallel to the insertion direction, is formed to be shorter than a length of an inner wall surface of said recess that is parallel to an insertion direction.

9. The rotary electrical machine according to claim 8,
wherein a bobbin made of a non-conductive material is disposed to align a plurality of coils in a radial direction of said slot,
said first coil segment and said second coil segment are inserted into said bobbin, and
said protrusion of said first coil segment and said recess of said second coil segment are fitted together by press-fitting in a direction parallel to the direction of said rotating shaft, and a fitting position is formed to be located inside said bobbin.

10. The rotary electrical machine according to claim 9,
wherein said first coil segment and said second coil segment are made of the same metal with an enamel coating,
said first metal layer is formed on said protruding side surface of said first coil segment, where the metal material of said first coil segment is exposed, and
a plating layer made of a metal having a lower hardness than said first metal layer is formed on non enamel-coated said inner wall surface of said second coil segment.

11. The rotary electrical machine according to claim 9,
wherein said first coil segment and said second coil segment are made of the same metal,
the first plating layer made of a metal is formed on non enamel-coated said inner wall surface of said first coil segment, and
the second plating layer made of a metal having a lower hardness than said first plating layer is formed on non enamel-coated said inner wall surface of said second coil segment.

Statement under Art. 19.1 PCT
Statement under Article 19(1) of the Treaty

The requirement following "said first coil segment and said second coil segments are made of the same metal" has been added to claim 1.

The part of the requirement moved to claim 1 has been deleted from claim 2.

Claim 3 corresponds to claim 4 before the amendment, and the cited claim number has been revised.

Claim 4 corresponds to claim 5 before the amendment, and has clarified that "said stepped surfaces are formed obliquely with respect to the insertion direction" and "said abutment surfaces are formed obliquely with respect to the insertion direction."

Claim 5 corresponds to claim 6 before the amendment.

Claim 6 is an independent claim that specifies a configuration in which both the first metal layer and the second metal layer are formed by plating in claim 1 before the amendment, and differs from claim 1 after the amendment in that both the first metal layer and the second metal layer are formed as plating layers and that the hardness of the second metal layer is lower.

In claim 7, the requirement in the last paragraph before the amendment has been replaced with the requirement in claim 8 before the amendment.

Claim 8 corresponds to the requirement in the last paragraph of claim 7 before the amendment.

Claim 10 has specified that a plating layer is formed only on the second coil segment side, and claim 11 has specified that a plating layer is formed on the side surfaces of both the protrusion and the recess.
